# EUROPEAN PATENT APPLICATION

(11) **EP 2 093 375 A2**
(43) Date of publication of application: **26.08.2009**
(21) Application number: 09250440.6
(22) Date of filing: 20.02.2009
(51) Int. Cl.: F01D 5/00

(54) **Method of repair for cantilevered stators**

(30) Priority: 21.02.2008 US 34725
(71) Applicant: United Technologies Corporation, Hartford, CT 06101 (US)
(72) Inventor: Long, Merrell W., North Waterboro Maine 04061 (US)
(74) Representative: Tomlinson, Kerry John

(57) **Abstract**

A method of repairing a cantilevered stator vane includes removing a damaged portion leaving a remaining vane portion (72). A supplemental airfoil portion (74) is then selected and is attached to the remaining vane portion to provide a repaired cantilevered stator vane.

## Description

### BACKGROUND OF THE INVENTION

This disclosure relates to repairing gas turbine engine components and, more particularly, to repairing a cantilevered stator vane.

Gas turbine engine components, such as turbine blades, turbine vanes, compressor blades, compressor vanes, or other components typically operate in a relatively high stress and high temperature environment. The stresses and temperature may result in damage to the component from corrosion, erosion, deformation, or the like. Depending on the type and severity of the damage, the components may be repaired and reused.

The type of repair process depends on the type of damage. For example, relatively elevated stresses and temperatures within the engine may cause deformation of a blade, vane, or other component. For a vane that is cantilevered, associated stresses may cause twisting of the vane, which could result in cracks being formed in an airfoil portion. Alternatively, a foreign object may enter the gas turbine engine and hit a cantilevered vane causing the vane to become cracked or chipped.

The cantilevered vanes are configured in vane segments, with one vane segment including a plurality of vanes. When one vane becomes damaged beyond predetermined repair limits, the entire vane segment is generally replaced. Replacement of an entire vane segment is costly compared to repairing individual damaged vanes.

Accordingly, there is a need for a cost-effective method to repair individual vanes without requiring an entire vane segment to be replaced.

### SUMMARY OF THE INVENTION

A method for repairing a cantilevered stator vane having an airfoil supported by a platform includes removing a damaged portion of the airfoil leaving a remaining vane portion. A supplemental airfoil portion is then selected and is attached to the remaining vane portion to provide a repaired cantilevered stator vane.

In one example, the supplemental airfoil portion is welded to the remaining vane portion forming a weld attachment interface. After welding, the weld attachment interface is blended and smoothed out, and is then heat treated.

In another aspect, the remaining vane portion is smoothed and cleaned prior to attachment of the supplemental air foil portion.

In one example, the damaged portion is removed by cutting across a width of the airfoil. The cut is located just beyond the damaged portion, or the airfoil can be cut at a location near the platform. If the cut is just beyond the damaged portion, the supplemental airfoil portion is cut to the proper length and is then attached to the remaining vane portion.

### BRIEF DESCRIPTION OF THE DRAWINGS

The various features and advantages of this invention will become apparent to those skilled in the art from the following detailed description of the currently preferred embodiment. The drawings that accompany the detailed description can be briefly described as follows.

Figure 1 is a highly schematic view of a turbine engine.

Figure 2 is a cross-sectional view of a compressor section of the turbine engine.

Figure 3 is a schematic representation of a damaged cantilevered stator vane.

Figure 4 is a schematic representation of a repaired cantilevered stator vane.

### DETAILED DESCRIPTION OF THE PREFERRED EMBODIMENT

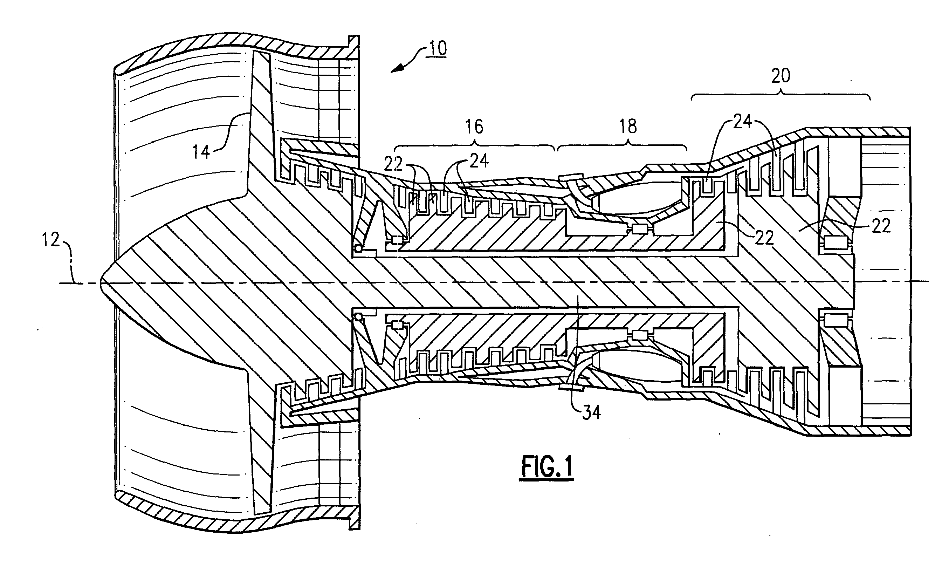

Figure 1 illustrates selected portions of an example turbine engine 10, such as a gas turbine engine used for propulsion. In this example, the turbine engine 10 is circumferentially disposed about an engine centerline 12. The turbine engine 10 includes a fan 14, a compressor section 16, a combustion section 18, and a turbine section 20. The compressor section 16 and the turbine section 20 include corresponding blades 22 and stator vanes 24. As is known, air compressed in the compressor section 16 is mixed with fuel and burned in the combustion section 18 to produce hot gasses that are expanded in the turbine section 20. Figure 1 is a highly schematic presentation for illustrative purposes only and is not a limitation on the disclosed examples. Additionally, there are various types of gas turbine engines, many of which could benefit from the examples disclosed herein and are not limited to the designs shown. For example, a gas turbine engine may contain a gearbox disposed between the turbine section 20 and the fan 14, allowing the fan 14 to turn at a different speed than the turbine. Also, for example, the compressor section 16 can include low pressure and high pressure sections with a combination of blades and disks that are coupled to rotate about the engine centerline 12. Further, the gas turbine engine may be used to turn an electrical generator instead of being used for propulsion.

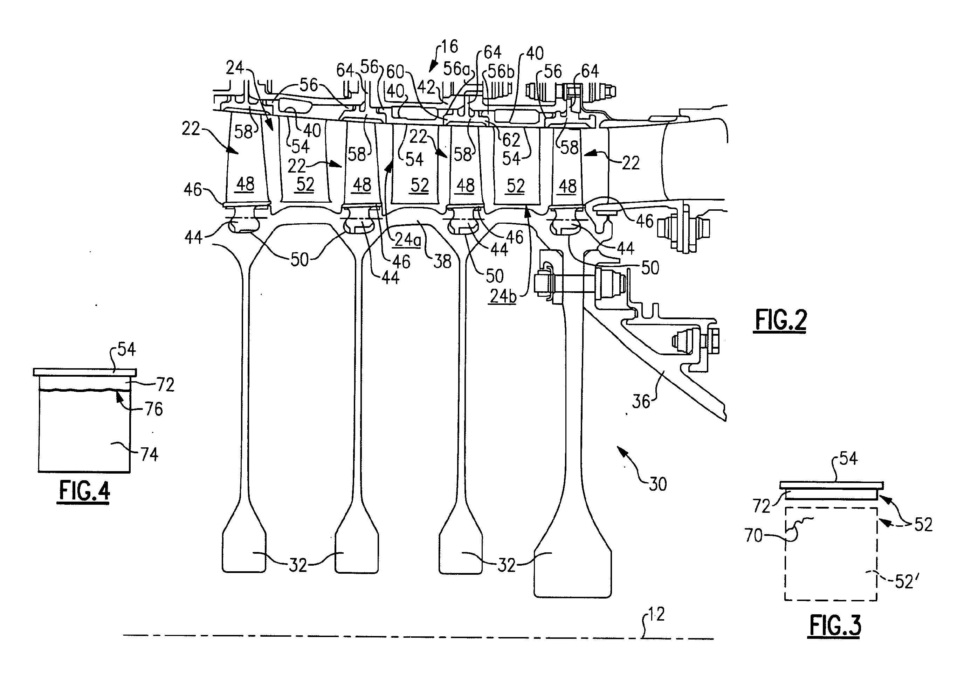

Figure 2 illustrates a more detailed example of the compressor section 16, and specifically shows a high pressure section 30 of the compressor. It should be understood that only the upper cross-section of the high pressure section 30 is shown in Figure 2, with the lower cross-section being similarly configured to that of the upper cross-section as the compressor includes a component that circumscribes the engine centerline 12. It should also be understood that the following description is also applicable to a low pressure section of the compressor section 16.

As shown in Figure 2, the high pressure section 30 includes a plurality of high pressure compressor (HPC) disks 32 that are mounted to rotate with a main shaft 34 (Figure 1) about the engine centerline 12. In the example shown, an attachment structure 36, which is mounted for rotation with the main shaft 34, is used to attach the HPC disks 32 to the main shaft 34. A support structure 38 has a portion that extends in a direction that is generally parallel to the engine centerline 12. One end of each of the HPC disks 32 is secured to the support structure 38, and the HPC disks 32 extend radially inwardly to distal ends that are positioned adjacent to the main shaft 34.

When assembled in the compression section 16, the blades 22 of the high pressure section 30 each have one end secured to the support structure 38 and extend radially outward to distal ends that are positioned adjacent to an outer shroud portion 40 and/or engine casing 42. Each of the blades 22 has a root portion 44 that extends radially inward from a platform 46 in a direction toward the engine centerline 12. Each blade 22 also includes an airfoil portion 48 that extends radially outward from the platform 46 in a direction away from the engine centerline 12. The root portion 44 is secured within a recess 50 formed in the support structure 38.

The stator vanes 24 of the high pressure section 30 comprise cantilevered stator vanes 24 that each extends radially inward to distal ends that are positioned near the support structure 38. The cantilevered stator vanes 24 each include one outer shroud portion 40, an airfoil portion 52, and a platform 54. The airfoil portion 52 has one end fixed to the outer shroud portion 40 and extends radially inward from the platform 54 toward the engine centerline 12. The outer shroud portion 40 includes feet 56 that extend in an axial direction and contact the engine casing 42. A plurality of vanes are fixed to the same outer shroud portion to form a vane segment.

An outer air seal 58 cooperates with the feet 56 to hold the outer shroud portion 40 in place against the engine casing 42. The outer air seal 58 includes a first axially extending portion 60 that engages one foot 56a on one outer shroud portion 40 for a first cantilevered stator 24a and a second axially extending portion 62 that engages another foot 56b on the outer shroud portion 40 for a second cantilevered stator 24b that is positioned adjacent to the first cantilevered stator 24a. One blade 22 is positioned between the first 24a and second 24b cantilevered stators to provide an alternating pattern of blades 22 and vanes 24. The outer air seal 58 also includes a flange portion 64 that extends radially outward in a direction away from the engine centerline 12. The flange portion 64 extends between portions of the engine casing 42 to facilitate providing a sealed interface.

It should be appreciated that the feet 56 may also be held by an inner diameter of the engine casing 42 in slots formed similar to those provided by outer air seal foot portions 56a and 56b. The slots in the inner diameter of the engine casing 42 position the cantilevered stator vanes 24 both axially and radially.

When the airfoil portion 52 of one of the cantilevered stator vanes 24 becomes damaged, the airfoil portion 52 may be repaired by replacing only the damaged air foil portion 52'. In other words, the entire vane segment of stator vanes does not have to be replaced; only the damaged portion of the single vane is repaired. If the airfoil portion 52 is damaged at a point indicated at 70 (Figure 3), the damaged airfoil portion 52' is removed from the vane segment at an airfoil location that is radially outward of the damage point 70, or at an airfoil location that is at or near a junction of the airfoil portion 52 to the platform 54.

In one exemplary embodiment, the damaged airfoil portion 52' may be separated from the vane segment by cutting the airfoil portion 52 across an entire width thereof. The airfoil portion 52 may be cut using an electric discharge machine (EDM) process or other machining processes. Once the airfoil portion 52 is removed, the remaining portion 72 (see Figure 3) of the airfoil is smoothed out and cleaned. A new or supplemental airfoil portion 74 (Figure 4) is then selected and welded to the remaining portion 72. An exemplary supplemental airfoil portion 74 has a complete airfoil cross-section and is in the form of a length of finished-shape vane extending from a tip thereof towards but not including a platform thereof. If the original airfoil portion 52 is not removed at or near the platform 54, the supplemental airfoil portion 74 is cut to a desired length and is then welded to the remaining portion 72. A linear friction welder, gas tungsten arc welding ( GTAW ), which is also known as tungsten inert gas (TIG) welding, or other welding methods are used to secure the supplemental airfoil portion 74 to the remaining portion 72 of the original airfoil portion 52 at a weld interface 76. This welding process is similar to welding processes for integrated blade rotors (IBRs).

After welding, the weld interface 76 is blended and smoothed and the repaired component is heat treated in a known manner for weld interfaces. The repaired component then undergoes nondestructive testing (NDT) such as fluorescent penetrant inspection (FPI) and X-ray inspection, for example. Once NDT has been satisfied, the repaired component can then be reinstalled in the turbine engine 10. Using this repair process provides significant cost savings as opposed to replacing the entire component.

Although a combination of features is shown in the illustrated examples, not all of them need to be combined to realize the benefits of various embodiments of this disclosure. In other words, a system designed according to an embodiment of this disclosure will not necessarily include all of the features shown in any one of the Figures or all of the portions schematically shown in the Figures. Moreover, selected features of one example embodiment may be combined with selected features of other example embodiments.

The preceding description is exemplary rather than limiting in nature. Variations and modifications to the disclosed examples may become apparent to those skilled in the art that do not necessarily depart from the essence of this disclosure. The scope of legal protection given to this disclosure can only be determined by studying the following claims.

## Claims

1. A method of repairing a cantilevered stator vane (24) comprising:
(a) providing a cantilevered stator vane including an airfoil (52) supported by a platform (54) that is to be supported by a non-rotating engine structure (40);
(b) removing a damaged portion (52') of the airfoil leaving a remaining vane portion (72);
(c) selecting a supplemental airfoil portion (74); and
(d) attaching the supplemental airfoil portion to the remaining vane portion.

2. The method according to claim 1 wherein step (d) includes welding the supplemental airfoil portion (74) to the remaining vane portion (72).

3. The method according to claim 1 or 2 including smoothing surfaces of the remaining vane portion (72) prior to step (d).

4. The method according to claim 3 including cleaning the surfaces of the remaining vane portion (72) prior to step (d).

5. The method according to claim 1, 2, 3 or 4 including blending and smoothing an attachment interface (76) formed between the remaining vane portion and the supplemental airfoil portion subsequent to step (d) to form a repaired cantilevered stator vane.

6. The method according to claim 5 including heat treating the repaired cantilevered stator vane (24) subsequent to step (d).

7. The method according to any preceding claim wherein the cantilevered stator vane (24) is to be positioned between as pair of compressor blades (22) that rotate about an engine axis, and wherein step (b) includes cutting the airfoil at a location radially inward of the platform relative to the engine axis and radially outward of the damaged portion relative to the engine axis.

8. The method according to any preceding claim wherein step (b) includes cutting across an entire width of the airfoil.

9. A cantilevered stator vane (24) comprising:
a first vane structure (72) to be supported by a non-rotating engine structure, said first vane structure comprising a non-damaged portion that remains after removal of a damaged portion; and
a second vane structure (74) secured to said first vane structure at an attachment interface (76), said second vane structure comprising a supplemental portion that is selected for attachment to said non-damaged portion, said first and said second vane structures cooperating to comprise a repaired cantilevered stator vane.

10. The cantilevered stator vane according to claim 9 including a platform (54) to be supported by the non-rotating engine structure, and wherein said first vane structure (72) comprises a first airfoil portion that extends away from said platform, said first airfoil portion comprising said non-damaged portion that remains after removal of a damaged airfoil portion, and wherein said supplemental portion (74) comprises a supplemental airfoil portion that is secured to said first airfoil portion at said attachment interface.

11. The cantilevered stator vane according to claim 9 or 10 wherein said attachment interface comprises a weld interface (76).

12. The cantilevered stator vane according to claim 9, 10 or 11 wherein said non-rotating engine structure comprises an outer shroud portion (40).

13. A gas turbine engine (10) comprising:
at least one of a fan (14) and a low pressure compressor;
a combustion section (18);
a turbine section (20);
a main shaft (34); and
a high pressure compressor (30) with a plurality of disks (32) and blades (22) that are mounted to rotate with said main shaft about an axis (12), said compressor including at least one cantilevered stator vane (24) as claimed in claim 9, 10, 11 or 12 that is mounted to a non-rotating engine structure (40).

14. The gas turbine engine according to claim 13 wherein said compressor includes a support structure (38) extending in a direction generally parallel to said axis with said disks (32) extending radially inward from said support structure toward said axis and said blades (22) extending radially outward from said support structure, and wherein a distal tip of said repaired cantilevered stator vane is spaced radially inward from said engine structure (40) in a space between two adjacent blades.
